# EUROPEAN PATENT APPLICATION

(11) **EP 3 772 287 A1**
(43) Date of publication of application: **10.02.2021**
(21) Application number: 20189521.6
(22) Date of filing: 05.08.2020
(51) Int. Cl.: A23L 27/00

(54) **PRODUCTION PROCESS OF A FOOD PRODUCT WITH TRUFFLE AROMAS**

(30) Priority: 07.08.2019 IT 201900014331
(71) Applicant: Fortunati Alfonso Di Fortunati Danilo - Tartufi Freschi e Conservati, 06042 Campello Sul Clitunno (PG) (IT)
(72) Inventor: FORTUNATI, DANILO, CAMPELLO SUL CLITUNNO (PG) (IT)
(74) Representative: Cutropia, Gianluigi

(57) **Abstract**

A production process of a food product with truffle aromas comprises the following steps: preparation of aromatized water by immersing fresh truffles in water, filling of a vessel (2) with said aromatized water, introduction of the vessel (2) in an oven (1) of an extraction system (100) that uses a gas in supercritical state, heating the oven at a temperature higher than the critical temperature (Tc) of the gas, feeding the gas in the vessel (2) in such a way that the gas is maintained in supercritical state and absorbs the aromas contained in said aromatized water, and extraction of the gas impregnated with aromas from the vessel (2) into an extraction container (6) wherein a food product (A) is disposed in such a way that the gas impregnated with aromas is mixed with the food product (A) and releases the aromas in the food product in order to obtain a food product with truffle aromas.

## Description

The present invention relates to a production process of a food product with truffle aromas.

As it is known, truffles are a special species of hypogeous mushroom that is very much appreciated in gastronomy. However, whole fresh truffles are rarely sold on the market because of their exorbitant price and of the difficulties encountered during transportation and preservation.

Considering that a very small quantity of truffle is sufficient to flavor a dish, truffle processing companies have been created to process truffles in order to obtain different types of packaged products that can be used for different types of dishes. Normally, jars with small whole truffles or truffle pieces, as well as other truffle-based products, such as sauces, creams and the like, are prepared. However, these products are cumbersome and easily perishable.

According to the legislation, truffle-based products must be free from foreign bodies and impurities and as much as possible healthy in order to be sold to final consumers. In particular, truffle creams must undergo thermal sterilization processes that impair the organoleptic characteristics of the cream.

Synthetic truffle products that are chemically produced in a laboratory are available on the market, such as natural-identical aromas (with molecules that exist in nature) and artificial aromas (with molecules that do not exist in nature). However, said synthetic products that are chemically produced in a laboratory have a substantially different flavor compared to natural truffles.

Chemical products with synthetic bismethylthiomethane base are known. In fact, although it represents one of the critical compounds of truffle aroma, such a molecule is not the only compound. The natural aroma of truffles is characterized by at least 60 different compounds that harmoniously interact with each other and also with other compounds produced by symbionts contained in truffles. Moreover, truffles and their by-products may undergo parasite attacks and develop unpleasant odors.

Extraction systems that use carbon dioxide in supercritical state (SC-CO2) for the production of medicinal extracts and for micronization techniques are known in the pharmaceutical and cosmetics industry.

Such extraction systems with carbon dioxide in supercritical state are also used in the food industry to produce decaffeinated coffee, deteinated tea, and hop for the beer industry.

The purpose of the present invention is to eliminate the drawbacks of the prior art by disclosing a production process of a food product with truffle aroma that is characterized by high food safety and high organoleptic properties with a similar flavor to natural truffle and at the same time is practical, versatile and not rapidly perishable.

These purposes are achieved according to the invention with the characteristics of the independent claim 1.

Advantageous embodiments of the invention appear from the dependent claims.

The production process of a food product with truffle aromas according to the invention is defined in claim 1.

The purpose of the process of the invention is to obtain for the first time truffle aroma from truffles. So far, it has been impossible to achieve such a result using the known processes of chemical, physical, enzymatic and microbiological kind.

The aroma extracted in gaseous state is conveyed and diluted in a food substance in such a way that the food substance can absorb the fragrance naturally. In this way, the label of the food product sold on the market can read "truffle essence".

In order to extract the truffle aroma, truffles are immersed in water in an extraction system that is similar to the ones used in other industrial sectors.

Because of the high solubility of its characteristic aromas, the truffles immersed in water largely aromatize the water. With a small quantity of truffles, which do not need to be aesthetically pleasant and may also have a low commercial value, quantities of aromatized water 10 times higher than the quantity of truffle used can be obtained.

Therefore, the aromatized water, which is going to be wasted, is appreciated. As a matter of fact, it is the only substance that can be used to extract the truffle aroma; if truffles were to be directly used instead of aromatized water, the results would be poor and the truffles would get damaged.

Additional features of the invention will appear more evident from the following detailed description, which refers to a merely illustrative, not limiting embodiment, shown in the appended figures, wherein:

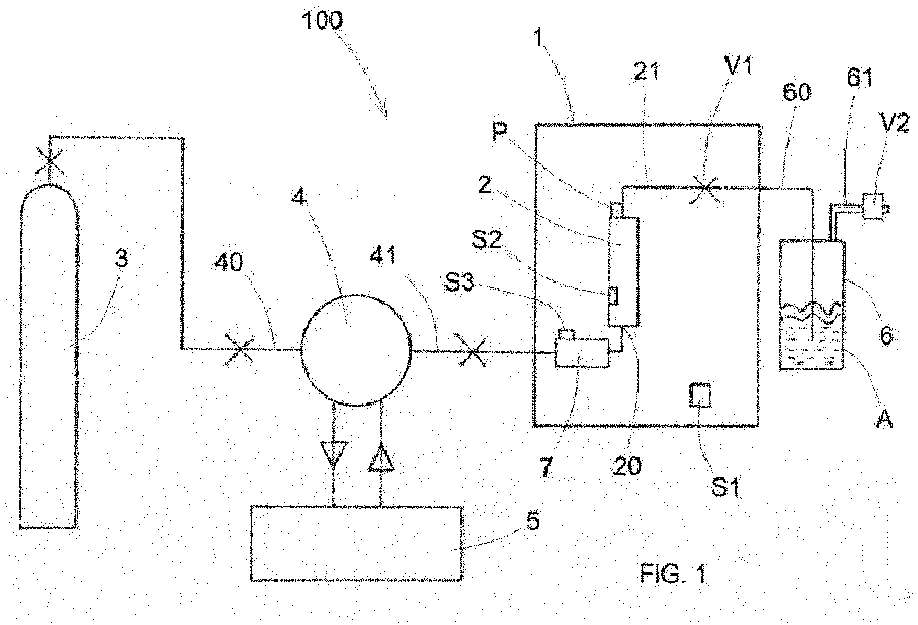

Fig. 1 is a block diagram of the system for the implementation of the production process of a food product with truffle aromas according to the invention;

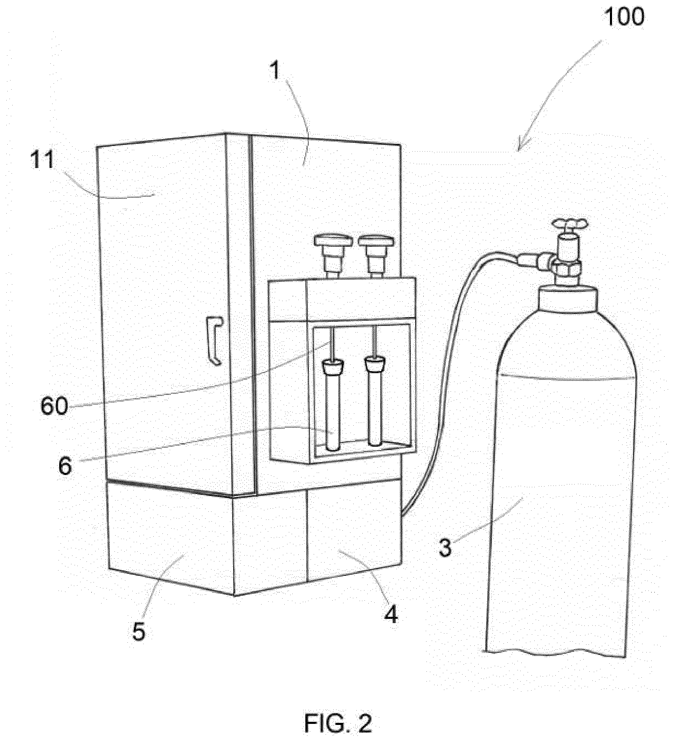

Fig. 2 is a diagrammatic perspective view of the system of Fig. 1; and
Fig. 3 is a diagrammatic perspective view of the oven of the system of Fig. 3 open with a vessel inside the oven.

With reference to the Figures, the extraction system for the implementation of the production process of a food product with truffle aroma according to the invention is described. Such an extraction system is generally indicated with reference numeral 100.

The extraction system (100) comprises an oven (1) suitable for containing at least one vessel (2) with aromatized water.

In order to obtain such aromatized water, fresh truffles are washed to remove any impurity and are immersed in fresh water wherein they remain for a time ranging from 1 hour to 3 days approximately, at a refrigeration temperature comprised between 0° and 10°C. In view of the above, the truffles release their aromas in the water and aromatized water is obtained.

An organic modifier (co-solvent) can be added in the vessel (2) in addition to the aromatized water in order to facilitate the aroma extraction process. Said organic modifier can be initially added together with the aromatized water or successively, after placing the vessel in the oven (1), by means of a pump that introduces the organic modifier in an inlet conduit of the vessel.

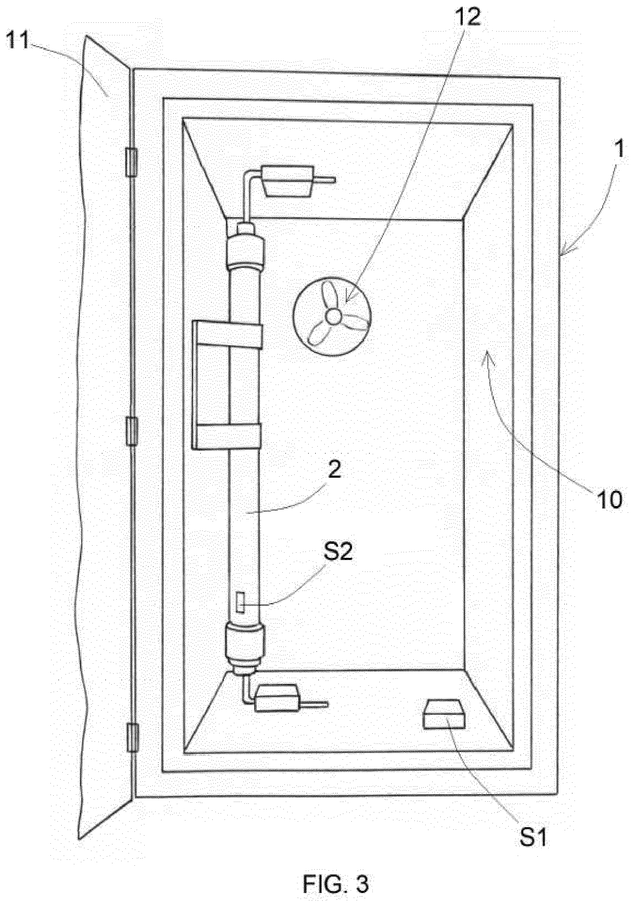

As shown in Fig. 3, the vessel (2) can be shaped as a cylindrical tube made of a metallic material, such as steel, in order to withstand high pressure. The vessel (2) can have a capacity from 5 milliliters to 1 liter. The vessel (2) is disposed in a chamber (10) of the oven (1).

The oven (1) has a door (11) in order to tightly close the chamber (10). For illustrative purposes, heating electrical resistances are disposed in the oven to heat the oven. Moreover, the oven (1) can be provided with a fan (12) in order to have ventilated air and a uniform heat distribution.

At least a first temperature sensor (S1) is disposed in the oven to detect the temperature in the chamber (10) of the oven. At least a second temperature sensor (S2) is disposed in the vessel (2) to detect the temperature of the vessel. The temperature sensors (S1, S2) can be thermocouples. In view of the above, the user can monitor the difference in temperature between the oven and the interior of the vessel. The oven (1) is configured in such a way to have a temperature of approximately 32-45°C, preferably 32-34°C, during the extraction process. The oven (1) is heated before introducing the vessel, but in any case the vessel will have certain inertia to achieve the processing temperature of the oven. Therefore, in order to be sure about the temperature achieved by the vessel, the user can monitor the temperature detected by the second temperature sensor (S2).

A fluid source (3) is connected to an extraction inlet (40) of a pump (4). The fluid contained in the source (3) is a gas with a relatively low critical pressure and a relatively low critical temperature. Preferably, the source (3) contains carbon dioxide (CO2). The source (3) can be an ordinary CO2 cylinder. In such a case, the CO2 contained in the cylinder is in liquid state.

A delivery output (41) of the pump (4) is connected to a distributor (7) that sends the gas to an inlet (20) of the vessel, (2) in such a way to pump pressurized CO2 inside the vessel (2). The pump (4) is configured in such a way that a high pressure of approximately 600 bars (8.700 psi) can be obtained inside the vessel (2).

The vessel (2) has an outlet conduit (21) connected to an extraction container (6) disposed outside the oven (1) to send the CO2 with aromas to the extraction container (6).

In order to increase the pressure in the vessel, at least one outlet valve (V1) is to be provided in the outlet conduit (21) of the vessel to completely close the CO2 circulation in the outlet conduit (21) of the vessel (static extraction) or to open the CO2 circulation in the outlet conduit (21) of the vessel (dynamic extraction) in a continuous, controlled way. In any case, a pressure sensor (P) detects the pressure inside the vessel (2) in such a way to control the pump (4) and maintain the desired pressure during the extraction process.

The outlet valve (V1) of the outlet conduit of the vessel can be for example a micrometric needle valve, in such a way to permit a variable gas flow from 0 to 25 liters/minute.

During the operation of the pump (4) and the pressure increase inside the vessel, the temperature of the pump head increases considerably. In order to maintain the pump head under 30°C, the pump head is chilled by means of a chiller (5) that creates a circulation of a glycol-based coolant in contact with the pump head, thus dissipating the temperature generated in the CO2 compression.

When leaving the pump (4), before being introduced in the vessel (2), the CO2 is pre-heated through the circulation in the distributor (7). For this reason, the distributor (7) is heated with an electrical resistance controlled by a temperature sensor (S3) in such a way to have a temperature of 34- 40°C.

During the extraction process, the optimal pressure to be maintained inside the vessel varies from 74 bars to 300 bars, preferably from 80 bars to 200 bars, and the temperature varies from 32°C to 45°C. The applicant has made several experimental tests at high pressure values of approximately 600 bars to reduce the pathogen bacterial charge. However, the effect caused by the high pressure has negatively affected the extracted aroma. Therefore, the pressure can be preferably maintained under 300 bars, in such a way to achieve an optimal compromise between the reduction of the bacterial charge and the organoleptic characteristics of the extracted aroma.

It must be considered that the CO2 is not in supercritical state at a temperature lower than 31.1°C or at a pressure lower than 73.8 bars. The fact that the CO2 is in supercritical state is a fundamental condition in order to trap the aromatic substances contained in the aromatized water.

In any case, the temperature inside the vessel (2) is to be higher than the critical temperature (Tc) of the CO2. Instead, above 45°C, the aromatized water contained in the vessel is denatured and loses all useful aromatic substances immediately.

As mentioned above, in order to absorb the truffle aromas contained in the aromatized water, the CO2 must be in supercritical state.

The extraction principle of the truffle aromas from the aromatized water is similar to the one applied to the industrial extractions of liquid-liquid type. In this case, however, the extracting fluid is not a liquid, but a high-intensity gas that is defined as supercritical gas because it is above its critical temperature (Tc) and therefore it cannot pass to liquid state even if it undergoes a high pressure. Carbon dioxide (C02) is the most frequently used gas for this type of extraction because it has a relatively low critical temperature (Tc = 31.1 °C) and a relative modest critical pressure (Pc = 73.8 bars).

Moreover, CO2 is inexpensive and non-toxic; it does not contaminate the extracted essences and can be used in closed cycle in industrial facilities (without emitting CO2 or organic solvents in the atmosphere).

When in supercritical state, the CO2 maintains some characteristics that are typical of the gaseous state, such as the capability of being diffused easily to penetrate solid and liquid matrices, and also some characteristics that are typical of the liquid state, such as the capability of achieving a high density, even higher than water (at a suitable pressure of hundreds of bars). The physical characteristics of CO2 in supercritical state (SC-CO2) allow CO2 to penetrate deeply in the matrices (aromatized water), like a gas, while having a high solvent power, like water, and dissolving the (apolar) aromatic components.

Moreover, the solvent power of SC-CO2 versus different components can be modulated by changing the process parameters: pressure and temperature, which determine the density of SC-CO2 and consequently its solvent power. After extracting the aromatic components, it will be sufficient to let the CO2 expand from the extraction container (6) by means of a suitable expansion valve (V2). The CO2 will cool at a temperature lower than Tc and will therefore pass to a low-density gaseous state, losing its solvent power and releasing the extracted aromas in the extraction container (6).

The outlet conduit (21) of the vessel is connected to a capillary conduit (60) that is introduced in the extraction container (6). The extraction container (6) is filled with a food product (A) that can be in liquid or paste form.

In this way, by opening the outlet valve (V1) of the vessel, the CO2 impregnated with aromas contained in the vessel (2) comes out of the vessel (2) through the capillary conduit (60) and gurgles in the food product (A) contained in the extraction container (6). The food product (A) can be a sauce, oil, melted butter or other melted grease, or a cream. In this way, the CO2 with truffle aromas is mixed with the food product (A) that embeds the truffle aromas.

The extraction container (6) is tightly closed and comprises an outlet conduit (61) where the expansion valve (V2) is disposed.

In order to increase the salubrity of the aroma, the extraction container (60) will remain tightly closed and will let the CO2 out only when a pressure from 0 to 6 bars is achieved.

Now the food product (A) inside the extraction container (6) will be aromatized and ready for consumption.

If the CO2 is not optimally attached to the aromatic molecules contained in the aromatized water, a solvent substance can be introduced in the vessel together with the CO2 in order to facilitate such an attachment.

If the solvent is a food solvent and does not affect the organoleptic characteristics of the food product (A), such a solvent can remain in the food product (A). Alternatively, the solvent can be eliminated and/or reduced by means of suitable chemical/physical processes.

The extraction system (100) extracts the aromas emanated directly from aromatized water with the immersion of fresh truffles, thus obtaining a product that is different from the truffle aromas that are obtained chemically in a laboratory by synthesis.

It must be noted that the low temperatures that are used in the process (32-45C°) and the almost total absence of oxygen (the process is carried out in a CO2 setting with density at 0.6 - 0.9 g/ml) prevent a decay of the extract, which is very sensitive and degrades easily also at low temperature, especially in the presence of oxygen.

Several equivalent variations and modifications can be made to the present embodiment of the invention, which are within the reach of an expert of the field, falling in any case within the scope of the invention as disclosed by the appended claims.

## Claims

1. Production process of a food product containing truffle aromas comprising the steps of:
- preparing aromatized water by immersing fresh truffle in water,
- filling a vessel (2) with said aromatized water,
- placing the vessel (2) in an oven (1) of an extraction system (100) that uses a gas in supercritical state with a critical temperature (Tc) and a critical pressure (Pc),
- heating the oven to a higher temperature than the critical temperature (Tc) of the gas,
- feeding the gas into the vessel (2) in such a way that a higher pressure than the critical pressure (Pc) of the gas is reached inside the vessel (2) and the gas is maintained in supercritical state and absorbs the aromas contained in said aromatized water,
- provisioning an extraction container (6) wherein a food product (A) is disposed, and
- extracting the gas impregnated with aromas from the vessel (2) into the extraction container (6) in such a way that the gas impregnated with the aromas is mixed with the food product (A) and releases the aromas in the food product in order to obtain a food product with truffle aromas.

2. The process of claim 1, wherein said gas used in the extraction system (100) is carbon dioxide (CO2).

3. The process of claim 1 or 2, wherein said step of feeding the gas in the vessel (2) is obtained by means of a pump (4) that extracts the gas from a source (3).

4. The process of claim 2 and 3, wherein said source (3) is a cylinder that contains CO2 in liquid state and the process provides for a step of cooling the pump (4) to cool the CO2 that is delivered from the pump and is fed in the vessel (2).

5. The process of any one of the preceding claims, wherein the processing temperature inside the vessel (2) is maintained within a range from 32C° to 45C°.

6. The process of any one of the preceding claims, wherein the processing pressure inside the vessel (2) is maintained within a range from 74 bars to 300 bars.

7. The process of any one of the preceding claims, wherein aromatized water is obtained by immersing fresh truffles in fresh water for a time approximately comprised between 1 hour and 3 days at a refrigeration temperature comprised between 0°C and 10°C.

8. The process of any one of the preceding claims, wherein said food product (A) disposed in the extraction container (6) comprises sauce, oil, butter or other melted grease, or cream.

9. The process of any one of the preceding claims, wherein a solvent is added together with the aromatized water in said vessel (2), said solvent consisting in an organic modifier.

10. The process of claim 9, wherein said organic modifier agent is of food type.
